(19) Europäisches Patentamt
European Patent Office
Office européen des brevets

(11) Numéro de publication: **0 117 174**
**A1**

(12)

# DEMANDE DE BREVET EUROPEEN

(21) Numéro de dépôt: 84400127.1

(51) Int. Cl.³: C 08 F 230/02

(22) Date de dépôt: 20.01.84

(30) Priorité: 21.01.83 FR 8300898

(43) Date de publication de la demande: 29.08.84 Bulletin 84/35

(84) Etats contractants désignés: AT BE CH DE FR GB IT LI LU NL SE

(71) Demandeur: Société Chimique des Charbonnages S.A.
Tour Aurore Place des Reflets
F-92080 Paris La Défense Cédex 5(FR)

(72) Inventeur: Brossas, Jean
21 rue d'Oslo
F-67000 Strasbourg(FR)

(72) Inventeur: Clouet, Gilbert
6 rue des Jardins
F-67610 La Wantzenau(FR)

(74) Mandataire: Dubost, Thierry
Société Chimique des Charbonnages S.A. Service
Propriété Industrielle B.P. No 49
F-62160 Bully Les Mines(FR)

(54) **Compositions de polymères acryliques ignifugés et leur procédé de préparation.**

(57) Les compositions selon l'invention comprennent au moins un copolymère et/ou un polymère greffé comprenant des motifs Y dérivés d'au moins un ester acrylique et/ou méthacrylique et au moins un motif de formule :

Z'
|
P = N
|
Z

dans laquelle Z et Z' représentent un atome d'halogène ou un radical choisi parmi les radicaux alkyles, cycloalkyles, aryles, arylalkyles, phényle, alcoxy, halogénoaryloxy, perhalogénoalcoxy et amines.

Leur procédé de préparation consiste en ce que l'on copolymérise et/ou greffe au moins un ester acrylique et/ou méthacrylique avec au moins un oligomère ou polymère de phosphazène portant des substituants Z et Z' choisis parmi les atomes d'halogène, les radicaux alkyles, cycloalkyles, aryles, arylalkyles, phényle, alcoxy, halogénoaryloxy, perhalogénoalcoxy et amines, la réaction de copolymérisation et/ou de greffage étant effectuée en présence d'un initiateur de radicaux libres.

EP 0 117 174 A1

Croydon Printing Company Ltd.

La présente invention est relative à des compositions de polymères acryliques ignifugés ainsi qu'à leur procédé de préparation.

Les techniques classiques d'ignifugation consistant à imprégner ou à enduire un polymère combustible par des produits ayant la propriété de réduire leur inflammabilité, sous forme de revêtements, vernis ou peintures sont souvent difficilement applicables et très coûteuses. Dans le cas de certains polymères thermoplastiques, on a également préconisé l'incorporation de composés phosphorés ou d'additifs du type polyphosphazène à la masse même du polymère à ignifuger, comme décrit par exemple dans le brevet français n° 2.251.567 et dans le brevet américain n° 4.042.561.

La présente invention s'est donné pour but de pourvoir à des compositions polymères acryliques ignifugés parfaitement stables au cours du stockage plus ou moins prolongé, sans altérer en aucune manière leurs caractéristiques mécaniques et thermiques.

La présente invention a pour objet des compositions polymères ignifugées caractérisées en ce qu'elles comprennent au moins un copolymère et/ou un polymère greffé comprenant des motifs Y dérivés d'au moins un ester acrylique et/ou méthacrylique et au moins un motif de formule :

$$\underset{\displaystyle Z}{\overset{\displaystyle Z'}{\underset{|}{\overset{|}{P}}}} = N$$

dans laquelle Z et Z' représentent un atome d'halogène ou un radical choisi parmi les radicaux alkyles, cycloalkyles, aryles, arylalkyles, phényle, alcoxy, halogénoaryloxy, perhalogénoalcoxy et amines. La proportion en poids de phosphore dans les compositions selon l'invention est de préférence comprise entre 1 et 10 %.

Conformément à la présente invention, les motifs Y dérivent d'un acrylate ou méthacrylate d'alkyle dont le groupe alkyle comprend par exemple de 1 à 8 atomes de carbone. Z et Z' représentent notamment les atomes de fluor, chlore, brome et iode, les radicaux alkyles, alcoxy et perhalogénoalcoxy dont la chaîne hydrocarbonée comprend de 1 à 6 atomes de carbone et les radicaux aryles et arylalkyles dont la chaîne hydrocarbonée comprend de 7 à 12 atomes de carbone. Ces différents groupes et radicaux peuvent être substitués ou non.

Les motifs de formule ZZ'P = N peuvent être distribués dans le copolymère et/ou le polymère greffé soit de manière statistique soit de manière séquentielle. Selon un mode de réalisation particulier de la présente invention, il peut être avantageux que le copolymère et/ou le polymère greffé comprenne des motifs ZZ'P = N de différentes formules, c'est-à-dire dans lesquelles Z et Z' représentent différents atomes ou radicaux.

Les compositions polymères ignifugées selon l'invention peuvent en outre comprendre au moins un polymère et/ou copolymère d'au moins un ester acrylique et/ou méthacrylique tel que défini ci-dessus. Il s'agit alors de mélanges comprenant d'une part un polymère (méth)acrylique connu en soi et d'autre part un copolymère et/ou polymère greffé décrit précédemment. On mélangera de préférence les deux constituants de ces mélanges en proportions telles que la composition finale comprenne de 1 à 10 % en poids de phosphore.

La présente invention a également pour objet un procédé de préparation de compositions polymères ignifuges, caractérisé en ce que l'on copolymérise et/ou greffe au moins un ester acrylique et/ou méthacrylique avec au moins un oligomère ou polymère de phosphazène portant des substituants Z et Z' choisis parmi les atomes d'halogène, les radicaux alkyles, cycloalkyles, aryles, arylalkyles, phényle, alcoxy, halogénoaryloxy, perhalogénoalcoxy et amines, la réaction de copolymérisation et/ou de greffage étant effectuée en présence d'un initiateur de radicaux libres.

Dans le cadre de la définition générale du procédé selon l'invention, deux variantes d'exécution sont à considérer. Selon la première variante du procédé, on effectue dans une première étape la polymérisation de l'ester (méth)acrylique en présence d'un initiateur de radicaux libres porteur d'au moins une fonction réactive, puis dans une seconde étape on met le polymère réactif ainsi obtenu en présence d'au moins un oligomère ou polymère de phosphazène portant les substituants Z et Z'. La première étape du procédé est effectuée par exemple sous pression atmosphérique à une température comprise entre 15 et 120°C. La seconde étape du procédé est effectuée par exemple sous pression atmosphérique à une température comprise entre 20 et 80°C.

Selon la seconde variante du procédé, on copolymérise, en présence d'un initiateur de radicaux libres, au moins un ester acrylique et/ou méthacrylique avec au moins un oligomère ou polymère de phosphazène portant des substituants Z et Z', l'un au moins de Z et Z' étant porteur d'au moins une insaturation. La réaction de copolymérisation est effectuée par exemple sous pression atmosphérique et à une température comprise entre 15 et 120°C.

Les oligomères ou polymères de phosphazène portant des substituants Z et Z' autres que des atomes d'halogène sont obtenus, de manière connue en soi, par réaction d'un oligomère ou polymère halogéné de phosphazène avec un composé organique nucléophile portant ledit substituant.

Par initiateur de radicaux libres au sens de la présente invention on entend notamment les composés diazoïques (tels que l'azo-bis-isobutyro-

nitrile), les peroxydes (tels que le peroxyde benzoïque éventuellement en mélange avec la N-méthylparatoluidine) et les hydroperoxydes. Par fonction réactive on entend notamment la fonction hydroxyle. Le 4,4' -azobis (4-cyanopentanol) constitue un exemple d'initiateur de radicaux libres porteur de fonctions réactives utilisables dans la première variante du procédé selon l'invention.

Lorsque les compositions selon l'invention comprennent en outre un polymère (méth)acrylique connu en soi, le mélange de ce polymère et du copolymère et/ou polymère greffé comprenant des motifs ZZ'P = N pour l'obtention desdites compositions peut se faire par tout procédé connu en soi. On peut par exemple opérer par voie sèche à l'aide d'un mélangeur du type BANBURY ou d'une extrudeuse à simple ou double vis ; on peut également dissoudre les polymères dans un solvant, de préférence volatil, ou dans un monomère, de préférence (méth)acrylique, dans les proportions désirées et faire évaporer le solvant pour recueillir le produit ou bien faire polymériser le monomère.

Les compositions peuvent en outre contenir des additifs et charges usuels tels que antioxydants, stabilisants, antistatiques, pigments et colorants, agents de dispersion, régulateurs de structure de mousse, charges inertes, etc...

Les compositions peuvent être mises en oeuvre selon les procédés de transformation usuels des polymères : moulage, injection, extrusion, calandrage, thermoformage, etc...

Dans les exemples ci-après, on indique également l'indice d'oxygène comme mesure des propriétés ignifugées, déterminé selon la norme ASTM D 2863.

Les exemples de mise en oeuvre de l'invention sont donnés ci-après à titre illustratif et non limitatif.

EXEMPLES 1 à 4

On fait d'abord réagir le trimère du chlorophosphazène avec le propénylate de sodium puis avec une solution de trifluoroéthanolate de sodium dans le tétrahydrofuranne. A l'issue des deux réactions on obtient un mélange des trimères de formules (I) et (II) ci-après :

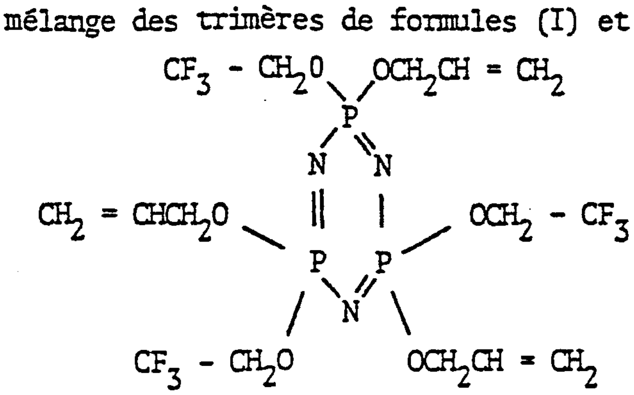

(I)

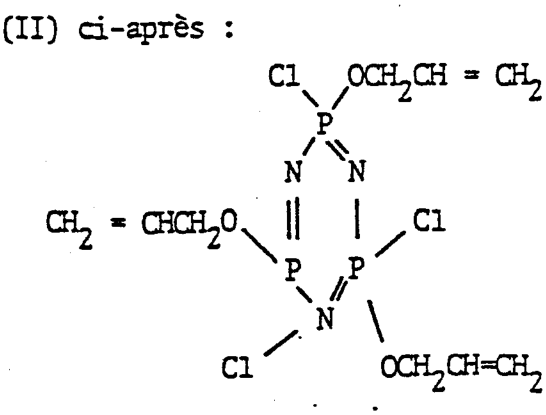

(II)

Ce mélange est ensuite copolymérisé avec un mélange de méthacrylate de méthyle et de polyméthacrylate de méthyle, sous pression atmosphérique et à une température de 55°C pendant plusieurs heures suivie de 115°C pendant une heure, en présence d'azo-bis-isobutyronitrile. Selon les quantités respectives dudit mélange et du méthacrylate de méthyle, la proportion en poids du phosphore dans le copolymère prend la valeur indiquée dans le tableau ci-après. D'autre part on mesure l'indice d'oxygène I du copolymère selon la méthode décrite précédemment et l'auto-extinguibilité AE selon la norme ASTM D-635. L'exemple 1 est donné à titre de comparaison.

TABLEAU

| EXEMPLE | 1 | 2 | 3 | 4 |
|---|---|---|---|---|
| % P | 0 | 2 | 3,5 | 5 |
| I | 18 | 28 | 30 | 29 |
| AE | non | oui | oui | oui |

## REVENDICATIONS

1. Compositions polymères ignifugées caractérisées en ce qu'elles comprennent au moins un copolymère et/ou un polymère greffé comprenant des motifs Y dérivés d'au moins un ester acrylique et/ou méthacrylique et au moins un motif de formule :

$$\begin{array}{c} Z' \\ | \\ P = N \\ | \\ Z \end{array}$$

dans laquelle Z et Z' représentent un atome d'halogène ou un radical choisi parmi les radicaux alkyles, cycloalkyles, aryles, arylalkyles, phényle, alcoxy, halogénoaryloxy, perhalogénoalcoxy et amines.

2. Compositions selon la revendication 1, caractérisées en ce que les motifs de formule ZZ'P = N sont distribués de manière statistique.

3. Compositions selon la revendication 1, caractérisées en ce que les motifs de formule ZZ'P = N sont distribués de manière séquentielle.

4. Compositions selon l'une des revendications 1 à 3, caractérisées en ce que le copolymère et/ou le polymère greffé comprend des motifs ZZ'P = N de formules différentes.

5. Compositions selon l'une des revendications 1 à 4, caractérisées en ce qu'elles comprennent en outre au moins un polymère et/ou copolymère d'au moins un ester acrylique et/ou méthacrylique.

6. Compositions selon l'une des revendications 1 à 5, caractérisées en ce que la proportion en poids de phosphore dans ladite composition est comprise entre 1 et 10 %.

7. Procédé de préparation de compositions selon la revendication 1, caractérisé en ce que l'on copolymérise et/ou greffe au moins un ester acrylique et/ou méthacrylique avec au moins un oligomère ou polymère de phosphazène portant des substituants Z et Z' choisis parmi les atomes d'halogène, les radicaux alkyles, cycloalkyles, aryles, arylalkyles, phényle, alcoxy, halogénoraryloxy, perhalogénoalcoxy et amines, la réaction de copolymérisation et/ou de greffage étant effectuée en présence d'un initiateur de radicaux libres.

8. Procédé selon la revendication 7, caractérisé en ce qu'on effectue dans une première étape la polymérisation de l'ester (méth)acrylique en présence d'un initiateur de radicaux libres porteur d'au moins une fonction réactive, puis dans une seconde étape on met le polymère réactif ainsi obtenu en présence d'au moins un oligomère ou polymère de phosphazène portant les substituants Z et Z'.

9. Procédé selon la revendication 8, caractérisé en ce que la première étape du procédé est effectuée sous pression atmosphérique à une

température comprise entre 15 et 120°C et en ce que la seconde étape du procédé est effectuée sous pression atmosphérique à une température comprise entre 20 et 80°C.

10. Procédé selon l'une des revendications 8 et 9, caractérisé en ce que la fonction réactive est la fonction hydroxyle.

11. Procédé selon l'une des revendications 8 et 9, caractérisé en ce que l'initiateur de radicaux libres porteur d'au moins une fonction réactive est le 4,4' -azobis (4-cyanopentanol).

12. Procédé selon la revendication 7, caractérisé en ce qu'on copolymérise, en présence d'un initiateur de radicaux libres, au moins un ester acrylique et/ou méthacrylique avec au moins un oligomère ou polymère de phosphazène portant des substituants Z et Z', l'un au moins de Z et Z' étant porteur d'au moins une insaturation.

13. Procédé selon la revendication 12, caractérisé en ce que la réaction de copolymérisation est effectuée sous pression atmosphérique et à une température comprise entre 15 et 120°C.

14. Procédé selon l'une des revendications 7 à 13, caractérisé en ce que les oligomères ou polymères de phosphazène portant des substituants Z et Z' autres que des atomes d'halogène sont obtenus par réaction d'un oligomère ou polymère halogéné de phosphazène avec un composé organique nucléophile portant ledit substituant.

15. Procédé selon l'une des revendications 7 à 14, caractérisé en ce que l'initiateur de radicaux libres est choisi parmi les composés diazoïques, les peroxydes et les hydroperoxydes.

Office européen des brevets

# RAPPORT DE RECHERCHE EUROPEENNE

0117174

Numéro de la demande

EP 84 40 0127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | RUSSIAN CHEMICAL REVIEWS, vol. 38, no. 8, 1969, pages 667-682, Cambridge; GB. V.V. KIREEV et al.: "Polyphosphazenes" * Page 678, alinas V,VI * | 1-15 | C 08 F 230/02 |
| | ----- | | |
| | | | DOMAINES TECHNIQUES RECHERCHES (Int. Cl. 3) |
| | | | C 08 F |

Le présent rapport de recherche a été établi pour toutes les revendications

| Lieu de la recherche | Date d'achèvement de la recherche | Examinateur |
|---|---|---|
| LA HAYE | 04-05-1984 | CAUWENBERG C.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant